(19) Europäisches Patentamt
European Patent Office
Office européen des brevets

(11) Veröffentlichungsnummer: **0 151 452**
**B1**

# (12) EUROPÄISCHE PATENTSCHRIFT

(45) Veröffentlichungstag der Patentschrift: **07.01.88**

(21) Anmeldenummer: **85100877.1**

(22) Anmeldetag: **29.01.85**

(51) Int. Cl.[4]: **C 04 B 28/06,** C 04 B 38/10, C 04 B 28/02, C 04 B 28/18, C 04 B 33/13, C 04 B 35/00 // (C04B28/06, 22:06, 22:08, 24:06, 24:24)

(54) **Verfahren zur Schnellerstarrung einer giessfähigen Rohmischung und Verwendung hiervon.**

(30) Priorität: **04.02.84 DE 3403866**

(43) Veröffentlichungstag der Anmeldung:
**14.08.85 Patentblatt 85/33**

(45) Bekanntmachung des Hinweises auf die Patenterteilung:
**07.01.88 Patentblatt 88/1**

(84) Benannte Vertragsstaaten:
**AT BE CH DE FR GB IT LI LU NL SE**

(56) Entgegenhaltungen:
**EP - A - 0 073 516**
**FR - A - 2 233 295**
**GB - A - 524 227**
**GB - A - 871 428**
**GB - A - 2 033 367**
**NL - C - 129 822**
**US - A - 4 102 962**

(73) Patentinhaber: **SICOWA Verfahrenstechnik für Baustoffe GmbH & Co. KG, Handerweg 17, D-5100 Aachen (DE)**

(72) Erfinder: **Koslowski, Thomas, Dr. Dipl.-Mineraloge, Buschmühle 1, D-5100 Aachen (DE)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

EP 0 151 452 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren zur gesteuerten Schnellerstarrung einer giessfähigen Rohmischung aus Füllstoff, Wasser, Kalkhydrat, gegebenenfalls Schaum und ferner Zement, der zumindestens anteilig ein mit Kalkhydrat reaktionsfähiges Aluminat, insbesondere Tonerdezement, mit einer als Abbindeverzögerer für das Aluminat dienenden, kompexbildenden, das Wachstum von Calciumaluminatsulfathydrat hemmenden, organischen Substanz, insbesondere Oxycarbonsäure, umfasst.

Aus der US-A-4 102 962 ist ein Verfahren zur Herstellung von Betonteilen bekannt, bei dem hydraulischer Zement verwendet wird, der Tonerdezement (10 bis 35% bezogen auf Gesamtzement) Kalk und/oder Kalkhydrat (5 bis 30% bezogen auf Tonerdezement) sowie einen Verzögerer in Form einer Oxy- oder Ketocarbonsäure oder eines Salzes hiervon enthält. Da bei einer mit diesem hydraulischen Zement hergestellten Rohmischung die Erstarrung sofort beginnt, können keine grösseren Chargen an Rohmischung hergestellt werden, die kontinuierlich verarbeitet werden, sondern die gesamte Charge ist sofort in die Form zu giessen, da keine offene Vorhalt- oder Topfzeit vorhanden ist. Hierbei wird mit sehr geringen Kalkmengen gearbeitet, damit nicht schon während des Mischens der Rohmischung eine zu starke Reaktion stattfindet. Die Rohlingsfestigkeit wird erst nach 20 min erreicht und den entformten Beton muss man wenigstens 2 h bis 5 Tage bei einer Temperatur geringer als 40°C in feuchter Atmosphäre stehen lassen, wonach eine Autoklavierung vorgenommen wird.

Aus der EU-A-0 038 552 ist ein Verfahren zum Herstellen von blockförmigen Wandbaustoffen auf Kalksilikatbasis bekannt, bei dem eine giessfähige Rohmischung im wesentlichen aus einem körnigen silikathaltigen Material wie Quarzsand, Kalk, Wasser, Zement und Schaum hergestellt wird, wobei als Zement Portlandzement zusammen mit einem Abbindebeschleuniger und gegebenenfalls einem -verzögerer bzw. ein entsprechend eingestellter Schnellzement verwendet wird, um zu erreichen, dass die Rohmischung, bevor sie in Formen gegossen wird, eine genügende Vorhaltzeit aufweist, während der praktisch keine festigkeitsbildenden Reaktionen stattfinden. Letztere werden im wesentlichen erst durch Wärmeeinwirkung, die in der Form erfolgt, ausgelöst, damit der Rohling eine genügende Festigkeit zum Entschalen und Transportieren aufweist. Der Rohling wird dann autoklavgehärtet. Bei diesem Verfahren benötigt man jedoch relativ grosse Mengen an Zement, um die notwendige Rohlingsfestigkeit zu erzielen, wobei es zudem schwierig ist, Vorhaltzeit und Abbinden in gewünschter Weise zu steuern.

Aus der GB-A-2 033 367 ist ein Schnellzement bekannt, der Portlandzement, Calciumaluminat, Calciumsulfat, ein anorganisches Salz, eine Carboxylsäure oder ein Salz hiervon, etwa Natriumcitrat enthält und in Mischung mit Wasser eine Vorhaltzeit von etwa 20 min besitzt. Vorwendet man jedoch einen derartigen Schellzement in kalkhydratreicher Umgebung, bindet er unkontrolliert und ausserordentlich schnell ab, da das Kalkhydrat sofort mit dem Calciumaluminat, reagiert, wie auch in der US-A-4 102 962 beschrieben ist. Die verwendeten Erstarrungsregulatoren würden das schnelle Abbinden nicht verhindern. Eine gezielte Erstarrungssteuerung wäre auch mit höheren Verzögererzusätzen nicht möglich, da diese zwar die Erstarrung etwas bremsen könnten, die weitere Festigkeitsentwicklung würde damit aber stark gestört. Für die Steuerung des Erstarrens und Erhärtens von kalkhydratreichen Systemen ist dieser Schnellzement nicht geeignet.

Aus der DE-A-2 547 765 ist ein Zement bekannt, der Tonerdezement, Calciumsulfat, einen organischen Abbindeverzögerer sowie einen bei der Hydratisierung Calciumhydroxid freigebenden Anteil, etwa Portlandzement, enthält und sich bei der Hydratation in Ettringit umwandelt und einen Schnellzement darstellt. Wenn man einen derartigen Zement in Gegenwart von grösseren Mengen freien Kalkhydrats verwendet, findet ein sofortiges Abbinden statt, so dass die Möglichkeit einer zeitlichen Steuerung der Vorhaltzeit und daher des Auslöses durch erhöhte Temperatur nicht gegeben ist. Dieses Bindemittelsystem ist, wenn kein freies Kalkhydrat vorhanden ist, steuerbar, da der Portlandzement kein nennenswertes Potential an frei verfügbarem Kalkhydrat besitzt. Portlandzement enthält maximal etwa 2% CaO, der zudem durch den hohen Brenngrad stark versintert und wenig reaktiv ist. Ansonsten ist der Kalk in Mineralphasen (z.B. $C_3S$ oder $C_2S$) fest eingebunden und wird erst im Stunden-Bereich langsam freigesetzt als Calciumhydroxid.

Aus der FR-A-2 233 295 ist es bekannt, einerseits ein Zement-, Mörtel- oder Betongemisch und andererseits einen Wirkstoff zur Schnellerstarrung in Form eines Pulvers oder einer Suspension aus Calciumaluminat und anorganischem Sufat herzustellen, wobei die sich durch Vermischen hiervon ergebende Rohmischung sofort zu verarbeiten ist. Der Wirkstoff kann einen Carboxylsäureverzögerer als auch einen Beschleuniger, der etwa auch geringe Mengen an Kalkhydrat aufweisen kann, enthalten. Abgesehen von letzterem wird ansonsten nicht im kalkhydratreichen Milieu gearbeitet. Der Wirkstoff soll möglichst mindestens eine halbe Stunde nicht erstarren, jedoch bei Vermischung mit dem Zement-, Mörtel- oder Betongemisch sehr rasch zu dessen Erstarrung führen, es wird ein Ansteifen in wenigen Minuten, z.B. zwischen 1 und 3 min, angestrebt. Hierbei wird jedoch die Frühfestigkeit, die auf Ettringitbildung beruht, sehr langsam im Stundenbereich erzielt. Dagegen werden keine gesteuerten, möglichst langen Vorhaltzeiten und Aktivierung durch Wärmeeinwirkung der Gesamtmischung bei sehr schnell erreichbarer Frühfestikeit angestrebt oder erhalten.

Aufgabe der Erfindung ist es, ein Verfahren der eingangs genannten Art zu schaffen, das es ermöglicht, mit einem möglichst geringen Zementanteil für die Erhärtung der Rohmischung auszukommen, und eine gute Steuerung der Vorhaltzeit und des Abbindeverhaltens mit der Möglichkeit des Erreichens von genügender Frühfestigkeit im Minutenbereich erlaubt.

Diese Aufgabe wird dadurch gelöst, dass das Aluminat mit dem organischen Abbildeverzögerer und Calciumsulfat in kalkhydratfreier Umgebung gegebenenfalls zusammen mit weiteren Bestandteilen der Rohmischung vorgemischt wird, so dass die Aluminatpartikel durch eine durch den organischen Abbindeverzögerer stabilisierte Schicht aus gelförmigem Ettringit gegen Reaktion mit Kalkhydrat abgeschirmt werden, und dass die fertige Rohmischung mindestens im wesentlichen soviel Kalkhydrat enthält, wie zur Umsetzung mit reaktivem Aluminat benötigt wird, so dass die Erstarrung der Rohmischung über die Bildung von Monophasen erfolgt, wobei durch Wahl der Mengenverhältnisse der Verzögererzusätze und der Mischungstemperatur das zeitliche Ingangsetzen der Erstarrung und die Hydratationscharakteristik gesteuert werden.

Zur Erstarrung werden hierbei folgende Formalreaktionen genutzt:

$$C_{12}A_7 + 16\,CH + 75H \longrightarrow 7C_4AH_{13}$$

und

$$CA + 3CH + 10H \longrightarrow C_4AH_{13}$$

Diese Reaktionen laufen an sich im Sekunden- bzw. Minutenbereich ab und führen extrem schnell zu sulfatfreien Monophasen der Mischkristallreihe

$$C_3(A, F)\,(Cs \cdot CH) \cdot H_{12}$$

Für diese Reaktionen ist ein hoher Calciumhydroxidbedarf bezogen auf das Aluminat zu dessen vollständiger Umsetzung erforderlich. Beispielsweise bedeutet das für die vollständige Reaktion zu $C_4AH_{13}$, dass zu einem handelsüblichen Tonerdezement (ca. 50% $Al_2O_3$) mit dem Hauptbestandteil CA (maximal ca. 80%) rein rechnerisch zu 100 Gew.-Teilen Tonerdezement 112 Gew.-Teile Calciumhydroxid zugesetzt werden müssen.

Die Steuerung der Vorhaltzeit und des Abbindeverhaltens muss in einer Rohmischung, die bereits beim Vermischen ein hohes Potential an frei verfügbarem Kalkhydrat (in Form von $Ca(OH)_2$ und/oder CaO) in Bezug auf das reaktive Aluminat aufweist, sicher gewährleistet sein, d.h. es gilt das reaktive Aluminat, beim Tonerdezement $C_{12}A_7$ und CA, das im Sekunden-Minutenbereich mit Kalkhydrat entsprechend den vorstehend aufgeführten Reaktionen reagieren würde, wirksam abzuschirmen, so dass über einen längeren Zeitraum, vorzugsweise von mehr als 0,5 h, hinweg die Rohmischung trotz hohen Kalkhydratanteils in Gegenwart von reaktivem Aluminat verarbeitbar bleibt.

In Abhängigkeit vom Temperaturniveau der Rohmischung kann durch Wahl der Rezeptur eine vorgegebene Vorhaltzeit eingestellt werden. Die Länge der Vorhaltzeit wird von der Temperatur der Rohmischung bei fester Rezeptur beeinflusst. Ausserdem ist die Rohmischung wärmeaktivierbar, d.h. dass die oben aufgeführten Reaktionen durch Erwärmung der Rohmischung, so dass diese auf eine deutlich über Umgebungstemperatur liegende Temperatur, die jedoch relativ niedrig sein kann, etwa grösser 45°C, gebracht wird, im wesentlichen schlagartig ausgelöst werden können, wobei sich eine genügende Frühfestigkeit im Minutenbereich, vorzugsweise in weniger als 2 min, ergibt.

Als Aluminat wird insbesondere Tonerdezement verwendet, jedoch lässt sich auch Aluminumsulfat, handelsübliches Monocalciumaluminat oder dgl. einsetzen. Dieses wird zusammen mit zwei Verzögerern, einer komplexbildenden, das Wachstum von Calciumaluminatsulfathydraten, die auch Ettringit und Halbhydrat umschliessen, hemmenden organischen Substanz, insbesondere eine Oxycarbonsäure, vorzugsweise Zitronen-, Wein-, oder Apfelsäure, und einem Sulfatträger in Form eines Calciumsulfats, insbesonde Halbhydrat, vorzugsweise Stuck- oder Baugips, oder Anhydrit, etwa Naturanhydrit, oder Dihydrat verwendet.

Wenn aus der Rohmischung herzustellende Rohlinge autoklaviert werden müssen, ist es zweckmässig, in Kombination die Sulfate Halbhydrat und Anhydrit zu verwenden, da dann, wenn nur Halbhydrat eingesetzt würde, sich damit eine sehr schnelle Frühfestigkeit erreichen liesse, so dass die Rohlinge in kurzer Zeit aufgrund der Monophasenausbildung entschal-, transportier- und stapelbar wären, jedoch wäre das hierbei gebildete Monophasengefüge, das kartenhausähnlich ist, aus strukturellen Gründen nicht autoklavierfest, d.h. dass es bei mechanischen Belastungen in der Aufheizphase des Härtezyklus zusammenbricht und zum Zerfliessen des Rohlings führt.

Bei Kombination der Sulfate Halbhydrat ($CaSO_4 \cdot 0,5H_5O$) und feingemahlenem Anhydrit, etwa Naturanhydrit ($CaSO_4$), ist der Rohling dagegen autoklavierfest. Der Naturanhydrit spielt bei der Steuerung der Schnellerstarrung infolge seiner Reaktionsträgheit nur eine untergeordnete Rolle. Während das Halbhydrat bei der Bildung von Primärettringit und der Monophasen verbraucht wird, bleibt der Naturanhydrit grösstenteils erhalten und kann nun, nachdem der Tonerdezement ausreagiert ist, mit den vergleichsweise Al-reichen und $SO_4$-armen Monophasen und nicht reagiertem Restaluminat zu dem $SO_4$-reicheren Sekundärettringit, der durch seinen langstrahligen, faserigen Habitus ein sehr günstiges Verfilzen und Verwachsen der Restmonophasen und der übrigen Restkomponenten bewirkt, gemäss folgender Reaktion reagieren

$$C_3ACs \cdot H_{12} + 2Cs + 20H \longrightarrow C_3A3Cs \cdot H_{32}$$

und damit der Rohling autoklavierfest werden. Diese Reaktion verläuft in der Spätphase des Erhärtens ca. 0,5 bis 2 h nach dem Erstarren. Bei der Berechnung des Anhydritzusatzes für die Sekundärettringitbildung ist das Sulfat aus anderen Komponenten der Rohmischung, z.B. Sulfat von Portlandzement, zu berücksichtigen. Die Sekundärettringitbildung ist mit einem weiteren Festigkeitsanstieg verbunden. Ausserdem wird dadurch das Schwinden des sich abkühlenden Rohlings kompensiert.

Falls kein Autoklavieren vorgesehen ist, kann der Naturanhydritzusatz entfallen.

Sowohl Zitronensäure (oder die ansonsten verwendete organische Verbindung) als auch Halbhydrat und Anhydrit stellen Abbindeverzögerer für Aluminat bzw. Tonerdezement dar (ggf. kann Sulfat aber auch die Reaktion von reinem Tonerdezement beschleunigen), wirken jedoch alleine nicht in kalkhydratreichen Systemen, da sie dann das Aluminat

bzw. den Tonerdezement nicht genügend gegen das Kalkhydrat abschirmen und dadurch auch keine Abbindeverzögerung herbeiführen können. Überraschender Weise hat sich jedoch gezeigt, dass durch die Kombination beider Abbindeverzögerer und separates Herstellen einer Mischung hiervon mit Wasser Aluminat bzw. Tonerdezement auch in kalkhydratreicher Umgebung, d.h. in solcher Umgebung, in der mehr Kalkhydrat (als solches zugegeben oder durch Löschen von Branntkalk in der Rohmischung entstanden) vorhanden ist, als zur Reaktion mit dem Aluminat bzw. Tonerdezement stöchiometrisch benötigt wird (d.h. neben dem gelösten Kalkhydrat liegt dieses auch noch in Suspension als grössere Kalkhydratquelle vor), in gewünschter Weise verzögert werden kann, während ausserdem durch entsprechende Wärmeeinwirkung eine praktisch schlagartige Desaktivierung des Verzögerungssystems bei relativ niedriger, jedoch deutlich über Umgebungstemperatur liegender Temperatur erfolgt.

Der Sulfatträger alleine führt bei der Vormischung zu einer Ettringitbildung an der Oberfläche der Aluminat- bzw. Tonerdezementteilchen, die jedoch in kalkhydratreicher Umgebung als bestätige Schutzschicht nicht ausreichen würde und daher das Erstarren der Rohmischung nicht bremsen könnte. Dieser Ettringit würde die anhydrischen Teilchen in einer dünnen Schicht aus kleineren säulenförmigen Kristallen bedecken. Kombiniert man jedoch bei der Vormischung Sulfat und organischen Verzögerer, so ist diese Schicht aus Primärettringit im wesentlichen röntgenamorph und gelförmig. Das Wachstum dieser Schicht wird durch die Zitronensäure, die an der Oberfläche der Primärettringitschicht als amorphes Tricalciumdicitrat ($C_{12}H_{10}Ca_3O_{14}\cdot 4H_2O$) nahezu monomolekular ausfällt, gebremst. Diese Schutzschicht aus Primärettringit und Tricalciumdicitrat (bzw. einem entsprechenden Salz eines anderen organischen Verzögerers) dichtet die Tonerdezementoberflächen sehr gut ab, wobei das Citrat zusätzlich die heterogene Keimbildung potentieller Hydratphasen unterdrückt. Gleichzeitig stellt bisher nicht reagiertes Sulfat und Zitronensäure (als Bodenkörper und in Lösung) ein reichlich grosses Potential dar, um Undichtigkeiten der Schutzschicht zu beheben und festigkeitsbildende Reaktionen zu unterbinden.

Das auf diese Weise in der Vormischung behandelte Aluminat ist wirksam verzögert und gewährleistet dann in der kalkhydratreichen Rohmischung eine hinreichend lange Vorhaltzeit. Es lassen sich je nach Temperatur der Rohmischung und Dosierung der Verzögererkombinationen Vorhaltzeiten in der Grössenordnung von 20 min bis zu 1 h und mehr einstellen.

Als Steuerungsparameter für die Vorhaltzeit und die Hydratationscharakteristik dienen u.a. die Zusatzmengen an organischem Verzögerer (Zitronensäure) und Calciumsulfat als Halbhydrat (aber auch als Dihydrat und weniger effektiv als Anhydrit). Ein proportionaler Anstieg beider Zusätze erhöht die Vorhaltzeit. Dominiert die Verzögerung durch die Zitronensäuredosierung, resultiert eine steile Erstarrungscharakteristik (Kurve C in dem Diagramm von Fig. 3, in dem die Festigkeit gegenüber der Zeit aufgetragen ist, Kurve A die Charakteristik einer Rohmischung ohne Verzögererkombination und Kurve B die Charakteristik einer Rohmischung mit Verzögererkombination, jedoch ohne Desaktivierung hiervon durch Wärme ist). Dominiert die Verzögerung durch die Calciumsulfathalbhydratdosierung, resultiert eine stärker geneigte Charakteristik (Kurve D).

Durch eine Temperaturerhöhung auf etwa oberhalb 45°C wird die Verzögerung schlagartig desaktiviert (Punkt E der Kurven C, D). Das amorphe Tricalciumdicitrat wandelt sich in kristallines, langprismatisch gewachsenes Tricalciumdicitrat um. Eine Unterdrückung der heterogenen Keimbildung bzw. Hemmung des Kristallwachstums von Hydratphasen ist nicht mehr gegeben. Die Primärettringitschicht bricht auf und das Aluminat kann mit dem Kalkhydrat der Rohmischung sehr schnell und vollständig reagieren. Dabei bilden sich grossvolumige blättrige Monophasen der Mischkristallreihe, die mehr oder weniger viel Sulfat (abhängig von der Calciumsulfatdosierung) in das Kristallgitter einbauen können.

Es erfolgt innerhalb kurzer Zeit in der Grössenordung von 1 bis 3 min eine Verfestigung der Rohmischung zu entschal-, transportier-, und stapelbaren Rohlingen. Darauf folgt bei zur Autoklavierung vorgesehener Rezeptur im Bereich von etwa 0,5 bis 2 h die Bildung des Sekundärettringits. Die ablaufende Reaktionskette kann formal folgendermassen, dargestellt werden:

A. Verzögerungsreaktion:

$$12CaO\cdot 7Al_2O_3 + 9CaSO_4\cdot 0{,}5H_2O + 2C_6H_8O_7 + nH_2O \longrightarrow Ca_3(C_6H_5O_7)\cdot 4H_2O + 3(3CaO\cdot Al_2O_3\cdot 3CaSO_4\cdot 32H_2O) + 8Al(OH)_3 + mH_2O$$

B. Festigkeitsbildende Reaktionen (Minutenbereich):

$$C_{12}A_7 + 16CH + 75H \longrightarrow 7C_4AH_{13}$$

$$CA + 3CH + 10H \longrightarrow C_4AH_{13}$$

C. Umkristallisation zu Sekundärettringit:

$$C_4AH_{13} + 3Cs + 20H \longrightarrow C_3A3Cs\cdot H_{32} + CH$$

Berücksichtigt man den Einbau von Sulfat in die Monophasen, so ist noch die vorstehend auf Kolonne 4 aufgeführte Reaktion heranzuziehen. Die Reaktionskette ist demnach:

Primärettringit — Monophasen — Sekundärettringit

Im Gegensatz dazu verlaufen die Reaktionen im Portlandzement über die Reaktionskette Ettringit — Monosulfat (sulfathaltig) — Monosulfat (sulfatfrei). Bei sehr hohen Sufatdosierungen wie bei der DE-A-2 547 765 wird als wesentliches Reaktionsprodukt der Frühfestigkeitsphase Ettringit gebildet, während bei der FR-A-2 233 295 und der GB-A-2 033 367 eine Mischkristallisation von AFM- und AFT-Phasen zu beobachten sein dürfte.

Die Reaktion zu Sekundärettringit aus Monophasen bzw. Restaluminat und Sulfat ist zwar z.B. bei Mörteln und Betonen als schädliche Reaktion (Sulfattreiben) bekannt, jedoch betrifft dies einen Zeitpunkt der Reaktion im Zement (Portlandzement) bzw. Mörtel oder Beton, nachdem der silikatische Teil des Zements reagiert hat und die Endfestigkeit erreicht wurde, d.h. nach Tagen, Wochen oder Monaten, und nicht wie beim erfindungsgemässen Verfahren gezielt hervorgerufen im Stundenbereich zum Erreichen von Autoklavierfestigkeit.

Insbesondere werden 77 Masse-% Tonerdezement zusammen mit 14,6 M.-% Naturanhydrit, 6,2 M.-% Stuckgips (Calciumsulfathalbhydrat) und 2,3 M.-% Zitronensäuremonohydrat vorgemischt verwendet, während allgemein 1 bis 3 M.-% organischer Abbindeverzögerer, 9 bis 25 M.-% Sulfatträger, Rest Tonerdezement, in kalkhydratfreier Umgebung mit einer entsprechenden Menge Wasser (W/Z zwischen 1 und 3) vorgemischt, zu guten Resultaten führen.

Vorwiegend bei Produkten, die nicht zur Autoklavierung vorgesehen sind, werden, 89 M.-% Tonerdezement zusammen mit 2 M.-% Zitronensäure und 9 M.-% Baugips verwendet, wobei allgemein 0,5 bis 4 M.-% organischer Abbindeverzögerer, 5 bis 12 M.-% Sulfatträger, Rest Tonerdezement, in kalkhydratfreier Umgebung mit einer entsprechenden Menge Wasser vorgemischt als günstig erwiesen haben.

Gegebenenfalls kann der Tonerdezement mit den beiden Verzögerern zusammen mit weiteren diesbezüglich sich inert verhaltenden Bestandteilen der Rohmischung vorgemischt werden, z.B. mit Füllstoffen wie Sand, Quarzmehl, Flugasche, Mineralfasern oder dgl., oder anderen Zementen wie Portlandzement oder dgl. Hierbei ist der über den Portlandzement eingebrachte Freikalk (CaO etwa maximal 2%) und das im Verlauf der Portlandzementhydratation freigesetzte Kalkhydrat aus den oben genannten Gründen für den Ablauf der beschriebenen Verzögerungsrelationen von untergeordneter Bedeutung. Berücksichtigt werden muss allerdings das eventuell durch diese Zemente eingebrachte Sulfat (Art und Menge), das sich gegebenenfalls in der Dosierung des Sulfatträgers auswirken kann.

Zum beschleunigten Anregen des Tonerdezementes bei Wärmeeinwirkung kann ein geringer Teil des Halbhydrates durch Kaliumsulfat ersetzt werden.

Das Verfahren eignet sich insbesondere auch dann, wenn der Rohmischung Schaum zugesetzt bzw. in dieser mittels eines Schaumerzeugers Schaum erzeugt wird, da es mit dem Schaum verträglich ist und sowohl von den chemischen Komponenten als auch der Auslösetemperatur her verträglich ist und nicht zu dessen Abbau führt.

Eine schnelle Erwärmung der Rohmischung auf die Auslösetemperatur lässt sich beispielsweise durch Hochfrequenzerwärmung der Rohmischung oder durch Einbringen der Wärme als Löschwärme von entsprechend gebremstem Branntkalk erzielen.

Das Verfahren kann bei der Herstellung von Baustoffen wie Wandbausteinen auf Kalksilikatbasis verwendet werden. Hierbei wird aus körnigem silikathaltigem Material, etwa Quarzsand oder -mehl, Kalk, Wasser und gegebenenfalls Schaum eine Rohmischung gebildet, der dann der mit den beiden Verzögerern vorgemischte Tonerdezement zugesetzt wird. Die Schaumzugabe kann auch nach Zusatz der Vormischung aus Tonerdezement und Verzögerern erfolgen.

Die Sekundärettringitbildung wird von der Mahlfeinheit und der Reaktivität des Anhydrits beeinflusst, so ist Naturanhydrit meist weniger reaktiv als künstlich hergestellter. Geringere Reaktivität und gröbere Mahlfeinheit verlängern die Reaktionszeit zur Ausbildung des Sekundärettringits.

*Beispiel 1*

Zur Herstellung von Kalksandsteinen niedriger Rohdichte werden 334 kg Quarzmehl und 135 kg Kalkhydrat trocken vorgemischt und dann mit 331 kg Wasser versetzt und zu einer ersten Vormischung gemischt. Gleichzeitig werden während 2 min 35 kg Tonerdezement + Zitronensäure + Stuckgips und ferner 5 kg Naturanhydrit — letzterer zur Sicherstellung der Autoklavierfestigkeit — unter Verwendung von 30 kg Wasser zu einer zweiten Vormischung vorgemischt und dann beide Vormischungen vermischt. Schliesslich werden 25 kg Schaum einer Rohdichte von 60 kg/m$^3$ untergemischt, danach die so erstellte Rohmischung in eine Strangformanlage gefüllt und darin mittels Hochfrequenzerwärmung auf etwa 45°C erwärmt. Die Rohmischung ist beim Verlassen der Strangformanlage nach ca. 2 min standfest und nach einer weiteren Minute transportfähig. Die vom Strang abgetrennten Rohlinge werden gestapelt, zu einem Autoklaven transportiert und nach 2 h dort dampfgehärtet. Es ergibt sich eine Steinrohdichte von etwa 500 kg/m$^3$ und eine Festigkeit grösser 2,5 N/mm$^2$.

Je nach Zusammensetzung der Vormischung aus Tonerdezement, Zitronensäure und Stuckgips ergeben sich unterschiedliche Rohlingsstandfestigkeiten und offene Vorhaltzeiten, wie sich aus Fig. 1 und 2 ergibt, in denen dreidimensional die eingesetzten Mengen von Stuckgips und Zitronensäure gegenüber der Rohlingsstandfestigkeit bzw. der offenen Vorhaltzeit aufgetragen ist. Hierbei hatte die Rohmischung eine Temperatur von 28°C vor dem Erwärmen in der Strangformanlage. Bei Absenkung dieser Temperatur durch Verwendung von kälterem Wasser (etwa in den kühleren Jahreszeiten oder durch gekühltes Wasser im Sommer) verschiebt sich insbesondere die offene Vorhaltzeit gegenüber den aufgetragenen Werten noch zu erheblich höheren Werten. Es ist aber ersichtlich, dass man selbst unter ungünstigen Bedingungen im Sommer noch ohne weiteres eine offene Vorhaltzeit von etwa einer halben Stunde erreichen kann. Die Rohlingsstandfestigkeit ist in willkürlich gewählten Bewertungseinheiten aufgetragen, wobei die Zahl 6 die höchste Bewertungszahl gegenüber Null (überhaupt keine Standfestigkeit) ist.

Der Tonerdezementanteil trägt zur Endfestigkeit des autoklavierten Steins praktisch nichts bei, sondern sorgt lediglich für die Rohlingsstandfestigkeit und Transportfähigkeit des Rohlings zum Autoklaven.

Bei der Herstellung von Baustoffen wie auf Kalksilikatbasis können auch andere Zemente wie Portlandzement (zum Liefern von zusätzlichem Aluminat), Eisenportlandzement und/oder Hochofenzement (der durch Liefern von reaktiver Kieselsäure nach dem Autoklavieren zusätzliche Festigkeit liefert, wobei

auch der durch den Zement mit eingebrachte Kalk als Reaktionspartner für die Kieselsäure dient) zusätzlich eingesetzt werden, die dann zur Erhöhung der Endfestigkeit dienen und die Herabsetzung des Tonerdezementanteils ermöglichen, da durch sie Aluminat der Rohmischung zugeführt wird. Hierdurch eingeführtes Sulfat ist bei der Berechnung der Menge des zu verwendenden Sulfatverzögerers zu berücksichtigen.

Das Verfahren kann auch bei der Herstellung von Keramik- und Feuerfestprodukten, die insbesondere schaumporosiert sein können, vorteilhaft verwendet werden, wobei jedoch Kalkhydrat zuzusetzen ist. Hierbei wird von einem Tonschlicker ausgegangen, der gegebenenfalls Magerungsmittel, Quarzmehl, Schamotte, Tabulartonerde od. dgl. als Zuschlag enthalten kann, wobei diesem dann einerseits Kalkhydrat und andererseits Tonerdezement mit den beiden Abbindeverzögerern derart zugesetzt wird, dass der Tonerdezement nicht vor Bildung einer Schutzschicht mit dem Kalkhydrat in Berührung gelangt. Das Verhältnis von reaktivem Aluminat + Verzögerer gegenüber Kalkhydrat liegt vorzugsweise mindestens etwa in der Grössenordnung von 2 : 1, wobei insbesondere bei Feuerfestprodukten angestrebt wird, den absoluten Kalkhydratgehalt zu minimieren. Bei Keramikprodukten lässt sich auch zusätzlich Kaliumcarbonat als Anreger für den Tonerdezement verwenden. Der Zementanteil bewirkt auch hier eine entsprechende Rohlingsstandfestigkeit, aber ausserdem hat man den Vorteil, dass aufgrund der Bildung von extrem wasserreichen Hydraten, wie $C_4AH_{13}$, $C_2AH_8$ und gegebenenfalls $C_3ACsH_{12}$, $C_3ACs_3H_{32}$ allenfalls nur ein geringes Trocknen der Rohlinge vorgenommen werden muss, das u.U. gänzlich entfallen kann. Diese wasserreichen Hydrate geben das Wasser bei erhöhter Temperatur beim Brennen zwar wieder ab, jedoch erfolgt dies so allmählich, dass keine Sprünge oder sonstige Beschädigungen der Produkte hervorgerufen werden. Durch das schnelle Erzielen einer genügenden Rohlingsstandfestigkeit wird die Rohlingsstandzeit, bisher durch das Trocknen bedingt sehr lange, extrem herabgesetzt und ausserdem kann man in einigen Anwendungsgebieten dort, wo bisher aufwendige wasserabziehende Gipsformen verwendet werden, auf diese verzichten und mit Plastikformen auskommen. Trotz der Zugabe von Sulfat und Kalkhydrat ergeben sich durch das Brennen keine das gebrannte Gut nachteilig beeinträchtigenden Phasen.

Bei der Herstellung von Keramikteilen kann man auch auf das als Verzögerer dienende Calciumsulfat teilweise verzichten, da die Umgebung nicht so kalkhydrathaltig ist wie etwa bei der Herstellung von Kalksilikatprodukten, und stattdessen ein Kaliumsalz als zusätzlicher Beschleuniger zum Kalkhydrat für den Tonerdezement verwenden. Dies hat zur Folge, dass der Rohlingsverfestiger vollständig in die keramische Bindung einbezogen wird.

Der Gesamtkalkhydratgehalt der Rohmischung lässt sich gegebenenfalls durch Verwendung von $Al_2O_3$-reicheren Tonerdezementen verringern.

Im übrigen kann man allgemein beim erfindungsgemässen Verfahren vorteilhaft CaO einsetzen, das der Rohmischung am Ende beigemischt wird und durch sein Ablöschen zu einer Steigerung der Temperatur der Rohmischung führt, die gegebenenfalls schon ausreichend für das Auslösen der festigkeitsbildenden Reaktionen durch den Tonerdezement ist oder nur noch eine geringe zusätzliche Wärmezufuhr erfordert. Bei gleichem Kalkhydratgehalt der Rohmischung muss bei Einsatz von CaO die Menge an Verzögerer an die im Vergleich zum Kalkhydrat geringere spezifische Oberfläche des CaO angepasst werden.

*Beispiel 2*

Aus 367 kg Ton inklusive Magerungsmittel und 429 kg Wasser wird ein Schlicker hergestellt, es wird eine Vormischung aus 30 kg Wasser und 29 kg Tonerdezement + Zitronensäure + Stuckgips (oder Baugips) erzeugt und mit dem Schlicker vermischt. Danach werden 29 kg Kalkhydrat zugesetzt und dann 22 kg Schaum einer Rohdichte von 60 kg/m$^3$ untergemischt. Die so erzeugte Rohmischung wird in Formen gefüllt, auf ca. 50°C mittels Hochfrequenzerwärmung erhitzt und nach 5 min entschalt, wobei die Erwärmung während 70 sec erfolgte. Die Rohlinge hatten eine ausreichende Standfestigkeit und wurden anschliessend gebrannt. Bei einer Brenntemperatur von 1200°C ergab sich eine Rohdichte von 527 kg/m$^3$ bei einer Gesamtschwindung von 19% und einer Brennschwindung von 12%, während bei einer Brenntemperatur von 1300°C eine Rohdichte von 689 kg/m$^3$ bei einer Gesamtschwindung von 28% und einem Brennschwund von 21% erreicht wurde. In beiden Fällen war die Endfestigkeit grösser 2,5 N/mm$^2$.

Hinsichtlich der Rohlingsstandfestigkeit und der offenen Vorhaltzeit ergeben sich sehr ähnliche Kurven wie die in den Figuren 1 und 2 abgebildeten.

Auch lässt sich das Verfahren im Zusammenhang mit Plasten etwa zur Herstellung von Mauerwerksverblendern oder Mörtel, Putz und Estrich verwenden, wobei neben den Plasten, etwa eine Acryldispersion od. dgl., als Füller Fasern, Sand, sowie Zusätze wie Methylcellulose und/oder Farbpigmente verwendet werden, wobei dann Tonerdezement + Oxycarbonsäure + Sulfatträger sowie Kalk etwa in Form von Kalkhydrat oder auch als CaO zur zusätzlichen Lieferung von chemischer Wärme verwendet wird. Hier kann gegebenenfalls zusätzlich oder anstelle des Sulfatträgers eine Kaliumverbindung, insbesondere Kaliumcarbonat, verwendet werden, da auch hier die Umgebung für den Tonerdezement weniger kalkreich als im Falle der Herstellung von Kalksilikatprodukten ist. Die Verwendung im Zusammenhang mit Plasten führt zu einer Kombination der durch die Plaste bewirkten Elastizität mit der durch den Zement bewirkten Festigkeit (die noch durch Zusatz von Portlandzement, Eisenportlandzement und/oder Hochofenzement gesteigert werden kann) in Verbindung mit einer schnellen Erhärtung sowie stofflichen Verbesserungen. Im Falle des Zusatzes von Portlandzement ist allerdings die Verwendung von Halbhydrat erwünscht.

Ferner lässt sich das Verfahren bei der Herstellung von zementgebundenen Produkten, insbesondere Schaumbetonprodukten, anwenden.

**Patentansprüche**

1. Verfahren zur gesteuerten Schnellerstarrung einer giessfähigen Rohmischung aus Füllstoff, Wasser, Zement, der zumindestens anteilig ein mit Kalkhydrat reaktionsfähiges Aluminat, insbesondere Tonerdezement, mit einer als Abbindeverzögerer für das Aluminat dienenden, komplexbildenden, das Wachstum von Calciumaluminatsulfathydrat hemmenden, organischen Substanz, insbesondere Oxycarbonsäure, umfasst, Kalkhydrat und gegebenenfalls Schaum, dadurch gekennzeichnet, dass das Aluminat mit dem organischen Abbindeverzögerer und Calciumsulfat in kalkhydratfreier Umgebung gegebenenfalls zusammen mit weiteren Bestandteilen der Rohmischung vorgemischt wird, so dass die Aluminatpartikel durch eine durch den organischen Abbindeverzögerer stabilisierte Schicht aus gelförmigem Ettringit gegen Reaktion mit Kalkhydrat abgeschirmt werden, und dass die fertige Rohmischung mindestens im wesentlichen soviel Kalkhydrat enthält, wie zur Umsetzung mit reaktivem Aluminat benötigt wird, so dass die Erstarrung der Rohmischung über die Bildung von Monophasen erfolgt, wobei durch Wahl der Mengenverhältnisse der Verzögererzusätze und der Mischungstemperatur das zeitliche Ingangsetzen der Erstarrung und die Hydratationscharakteristik gesteuert werden.

2. Verfahren nach Anspruch 1, dadurch gekennzeichnet, dass eine Haltezeit von etwa 15 min bis 1,5 h, insbesondere 30 min bis 1 h eingestellt wird.

3. Verfahren nach Anspruch 1 oder 2, dadurch gekennzeichnet, dass die Rohmischung nach dem Verarbeiten innerhalb der Vorhaltezeit kurzzeitig auf eine Temperatur von mehr als etwa 45°C erwärmt wird.

4. Verfahren nach Anspruch 3, dadurch gekennzeichnet, dass die Rohmischung etwa 1 bis 2 min und mit steilem Temperaturanstieg erwärmt wird.

5. Verfahren nach einem der Ansprüche 1 bis 4, dadurch gekennzeichnet, dass als Calciumsulfat Calciumsulfathalbhydrat, insbesondere Stuckgips, verwendet wird.

6. Verfahren nach einem der Ansprüche 1 bis 5, dadurch gekennzeichnet, dass zur Herstellung autoklavierter Produkte Halbhydrat in Kombination mit Anhydrit, vorzugsweise im Gewichtsverhältnis von 1 : 2 bis 1 : 3, verwendet wird.

7. Verfahren nach einem der Ansprüche 1 bis 6, dadurch gekennzeichnet, dass Calciumsulfat in einer Menge von 5 bis 25 Gew.-% des Anteils Tonerdezement, organischer Abbindeverzögerer und Calciumsulfat verwendet wird.

8. Verfahren nach einem der Ansprüche 1 bis 7, dadurch gekennzeichnet, dass als organischer Abbindeverzögerer Zitronen-, Wein- und/oder Apfelsäure insbesondere in einer Menge von etwa 1 bis 3 Gew.-% des Anteils Tonerdezement, organischer Abbindeverzögerer und Calciumsulfat verwendet wird.

9. Verfahren nach einem der Ansprüche 1 bis 8, dadurch gekennzeichnet, dass ein Teil des Calciumsulfats durch eine Kaliumverbindung ersetzt wird.

10. Verfahren nach Anspruch 9, dadurch gekennzeichnet, dass bei Schaum enthaltenden Rohmischungen Kaliumsulfat verwendet wird.

11. Verfahren nach Anspruch 9, dadurch gekennzeichnet, dass bei schaumlosen Rohmischungen Kaliumcarbonat verwendet wird.

12. Verwendung des Verfahrens nach einem der Ansprüche 1 bis 11 bei der Herstellung von Kalksilikatprodukten, insbesondere Schaumsilikatprodukten, wobei der Füllstoff aus körnigem silikathaltigem Material besteht.

13. Verwendung des Verfahrens nach einem der Ansprüche 1 bis 11 bei der Herstellung von zementgebundenen Produkten, insbesondere Schaumbetonprodukten.

14. Verwendung des Verfahrens nach einem der Ansprüche 1 bis 11 bei der Herstellung von Keramik- oder Feuerfestprodukten, die insbesondere schaumporosiert sind, wobei der Rohmischung Kalkhydrat zugesetzt wird.

15. Verwendung des Verfahrens nach einem der Ansprüche 1 bis 11 bei der Herstellung von Baustoffen auf der Basis von Plasten.

16. Verwendung des Verfahrens nach einem der Ansprüche 1 bis 11 zur Herstellung von Mörtel, Putz oder Estrich.

17. Verwendung nach einem der Ansprüche 12 bis 16, dadurch gekennzeichnet, dass bei der Herstellung der Rohmischung Kalkhydrat verwendet wird.

18. Verwendung nach einem der Ansprüche 12 bis 16, dadurch gekennzeichnet, dass bei der Herstellung der Rohmischung Branntkalk mit einer entsprechenden Menge Löschwasser verwendet wird.

19. Verwendung nach einem der Ansprüche 13 bis 18, dadurch gekennzeichnet, dass Kalkhydrat im Gewichtsverhältnis zu reaktivem Aluminat mindestens in der Grössenordnung von 1 : 2 zugesetzt wird.

20. Verwendung nach einem der Ansprüche 12, 13 bzw. 15, bis 19, dadurch gekennzeichnet, dass zusätzlich Portlandzement, Eisenportlandzement und/oder Hochofenzement der Rohmischung zugesetzt wird.

**Claims**

1. Method of controlling rapid setting of a flowable raw mixture comprising filler, water, cement, of which at least a proportion is an aluminate, especially alumina cement, capable of reacting with hydrated lime, with an organic substance of complex form, especially hydroxycarboxylic acid, serving as a reaction retarder for the aluminate, hindering the production of hydrated sulphate of calcium and aluminium, hydrated lime and as appropriate foam, characterised in that the aluminate is pre-mixed with the organic reaction retarder and calcium sulphate in a hydrated lime-free environment if necessary together with further components of the raw mixture, so that the aluminate particles are protected against reaction with hydrated lime by a layer of gelatinous hydrated basic sulphate of calcium and aluminium stabilised by the organic reaction retarder, and in that the prepared raw mixture contains at least the essential amount of hydrated lime, as is necessary for the reaction with reactive aluminate,

so that the hardening of the raw mixture results in the formation of monophases, the timing of the activation of the hardening and the hydration characteristic being controlled by the choice of the proportions of the retarding additions and the mixing temperature.

2. Method according to claim 1, characterised in that a holding of about 15 minutes to 1 and a half hours preferably 30 minutes to 1 hour, is employed.

3. Method according to claim 1 or 2, characterised in that the raw mixture is warmed to a temperature of more than about 45°C after the preparation within the temporary holding time.

4. Method according to claim 3, characterised in that the raw mixture is warmed for about 1 - 2 minutes and with a steep temperature rise.

5. Method according to one of claims 1 to 4, characterised in that half-hydrated calcium sulphate, especially plaster of Paris, is used as calcium sulphate.

6. Method according to one of claims 1 to 5, characterised in that half-hydrate in combination with anhydrous, preferably in proportions by weight of 1 : 2 to 1 : 3, is used for the production of the autoclaved product.

7. Method according to one of claims 1 to 6, characterised in that calcium sulphate is used in an amount from 5 to 25 weight-% of the proportion of alumina cement, organic reaction retarder and calcium sulphate.

8. Method according to one of claims 1 to 7, characterised in that citric, tartaric and/or malic acid is used as the organic retarder preferably in a quantity of about 1 to 3 weight-% of the proportion of alumina cement, organic reaction retarder and calcium sulphate.

9. Method according to one of claims 1 to 4, characterised in that a part of the calcium sulphate is replaced by a potassium compound.

10. Method according to claim 9, characterised in that potassium sulphate is used in foam-containing raw mixtures.

11. Method according to claim 9, characterised in that potassium carbonate is used in foam-free raw mixtures.

12. Use of the method according to one of claims 1 to 11 in the production of lime silicate products, especially foamed-lime silicate products, wherein the filler consists of granular silicate containing material.

13. Use of the method according to one of claims 1 to 11 in the production of cement-bound products, especially foam-concrete products.

14. Use of the method according to one of claims 1 to 11 in the production of ceramic or fire-proof products, which are especially foam porous wherein hydrated lime is added to the raw mixture.

15. Use of the method according to one of claims 1 to 11 in the production of building materials on the basis of plaster.

16. Use of the method according to one of claims 1 to 11 for the production of mortar, stucco or screeding.

17. Use according to one of claims 12 to 16, characterised in that hydrated lime is used in the production of the raw mixture.

18. Use according to one of claims 12 to 16, characterised in that quick lime with a corresponding amount of slaking water is used in the production of the raw mixture.

19. Use according to one of claims 13 to 18, characterised in that hydrated lime is added in proportion by weight to the reactive aluminate at least of the order of magnitude of 1 : 2.

20. Use according to one of claims 12, 13 or 15 to 19, characterised in that additional portland cement, ferro-portland and/or blast furnace cement is added to the raw mixture.

**Revendications**

1. Procédé de contrôle de la solidification rapide d'un mélange apte au moulage composé d'une charge, d'eau, de ciment qui contient pour partie au moins un aluminate pouvant réagir à la chaux hydratée, plus particulièrement un ciment alumineux avec une substance organique complexante qui sert d'agent de retard de prise pour l'aluminate et inhibe la croissance de l'hydrate sulfaté d'aluminate de calcium, plus particulièrement un acide oxycarbonique, de la chaux hydratée et éventuellement une mousse, caractérisé par le fait qu'on réalise un mélange préalable de l'aluminate avec le retardateur de prise organique et le sulfate de calcium, dans un environnement exempt de chaux hydratée et avec éventuellement d'autres éléments du mélange brut, de telle sorte que les particules d'aluminate soient protégées contre une réaction avec la chaux hydratée par une couche de gel d'ettringite stabilisée par le retardateur de prise organique, et par le fait que le mélange brut fini contient au moins à peu près autant de chaux hydratée qu'il est nécessaire à la conversion avec l'aluminate réactif de telle sorte que le mélange se solidifie par la formation de monophases, les proportions des additifs d'agents retardateurs et la température du mélange étant choisies de manière à pouvoir contrôler le moment de la mise en route de la solidification et la caractéristique d'hydratation.

2. Procédé selon la revendication 1, caractérisé par le fait que l'on effectue la mise au point pour une durée de conservation comprise entre 15 minutes et 1 heure et demie et, plus spécifiquement, comprise entre 30 et 60 minutes.

3. Procédé selon la revendication 1 ou 2, caractérisé par le fait que le mélange une fois élaboré est échauffé pendant une courte période à une température dépassant 45°C, ceci à l'intérieur de la durée de conservation fixée.

4. Procédé selon la revendication 3, caractérisé par le fait que le mélange brut est échauffé pendant une à deux minutes, l'augmentation de la température étant très rapide.

5. Procédé selon l'une des revendications 1 à 4, caractérisé par le fait que le sulfate de calcium utilisé est un semi-hydrate de sulfate de calcium, en particulier de la fleur de plâtre.

6. Procédé selon l'une des revendications 1 à 5, caractérisé par le fait que, pour obtenir des produits traités en autoclaves, on utilise un semi-hydrate en combinaison avec de l'anhydrite, dans un rapport de poids qui est de préférence de 1 : 2 à 1 : 3.

7. Procédé selon l'une des revendications 1 à 6, caractérisé par le fait que le sulfate de calcium est utilisé dans une proportion de 5 à 25% en poids de l'ensemble ciment alumineux, retardateur de prise organique et sulfate de calcium.

8. Procédé selon l'une des revendications 1 à 7, caractérisé par le fait que le retardateur organique est un acide citrique, un acide tartrique et/ou malique, plus particulièrement dans une proportion de 1 à 3% en poids de l'ensemble ciment alumineux, retardateur, organique et sulfate de calcium.

9. Procédé selon l'une des revendications 1 à 8, caractérisé par le fait qu'une partie du sulfate de calcium est remplacée par un composé de potassium.

10. Procédé selon la revendication 9, caractérisé par le fait que du sulfate de potassium est utilisé dans les mélanges bruts contenant de la mousse.

11. Procédé selon la revendication 9, caractérisé par le fait que l'on utilise du carbonate de potassium dans le cas de mélanges bruts sans mousse.

12. Application du procédé selon l'une des revendications 1 à 11 à la fabrication de produits de silicates de chaux, particulièrement de silicates de chaux moussés, la charge étant composée d'une matériau contenant un silicate granulaire.

13. Application du procédé selon l'une des revendications 1 à 11 à la fabrication de produits liés au ciment, particulièrement du béton moussé.

14. Application du procédé selon l'une des revendications 1 à 11 à la fabrication de produits de céramique et de produits réfractaires avec porosité cellulaire, de la chaux hydratée étant ajoutée au mélange brut.

15. Application du procédé selon l'une des revendications 1 à 11 à la fabrication de matériaux à base de plastiques.

16. Application du procédé selon l'une des revendications 1 à 11 à la fabrication de mortier, d'enduit ou d'aire.

17. Application selon l'une des revendications 12 à 16, caractérisé par le fait que l'on utilise un semihydrate pour la fabrication du mélange brut.

18. Application selon l'une des revendications 12 à 16, caractérisé par le fait que l'on utilise pour la fabrication du mélange brut de la chaux vive avec la quantité d'eau nécessaire pour son extinction.

19. Application selon l'une des revendications 13 à 18, caractérisé par le fait que l'on ajoute de la chaux hydratée à l'aluminate réactif selon un rapport d'environ 1 : 2 en poids.

20. Application selon l'une des revendications 12, 13 ou 15 à 19, caractérisé par le fait que l'on ajoute en outre au mélange brut du ciment de Portland, du ciment de laitier et/ou du ciment de hautfourneau.

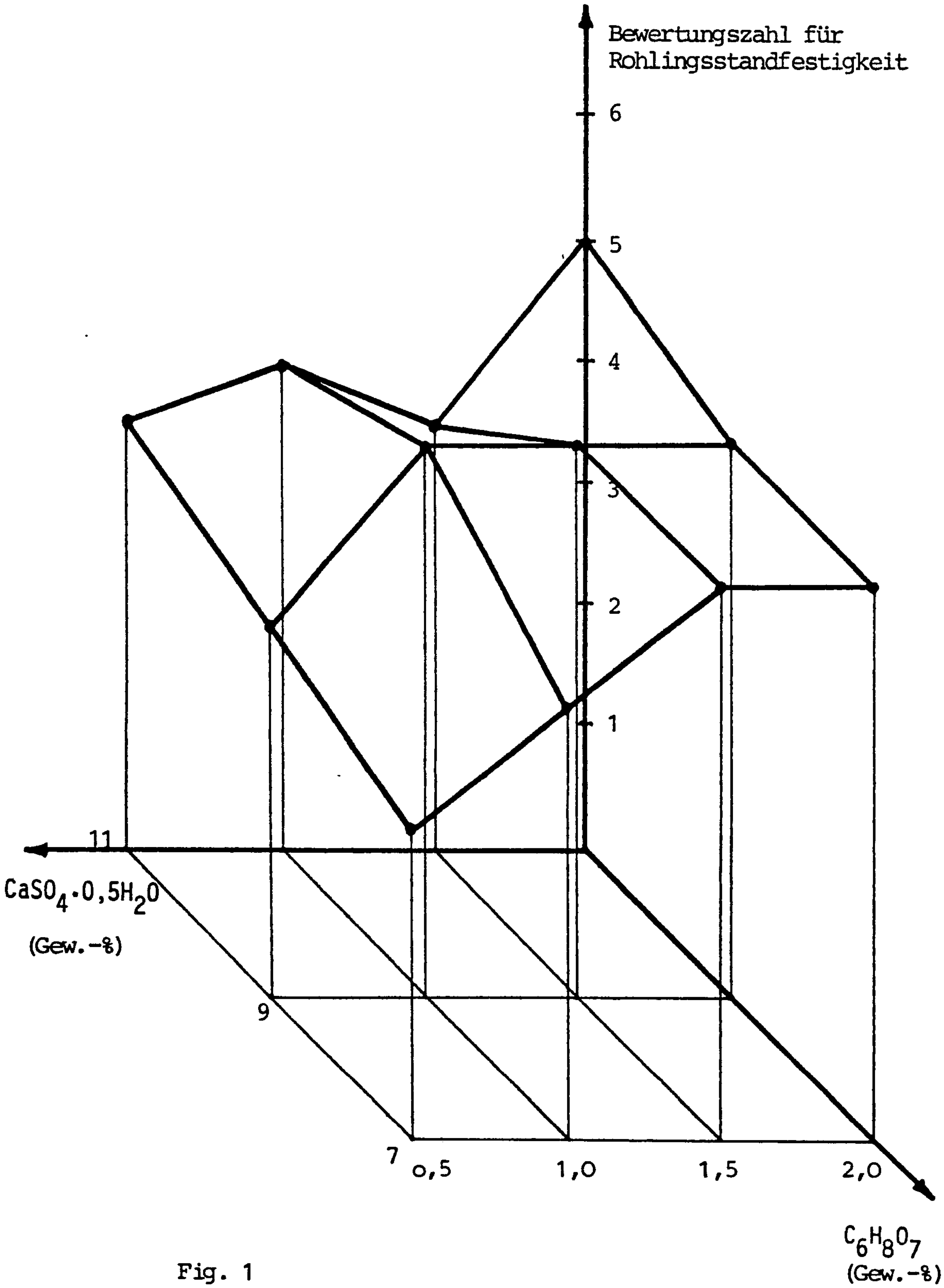
Bewertungszahl für
Rohlingsstandfestigkeit
6
5
4
3
2
1
11
$CaSO_4 \cdot 0,5H_2O$
(Gew.-%)
9
7
0,5
1,0
1,5
2,0
$C_6H_8O_7$
(Gew.-%)

Fig. 1

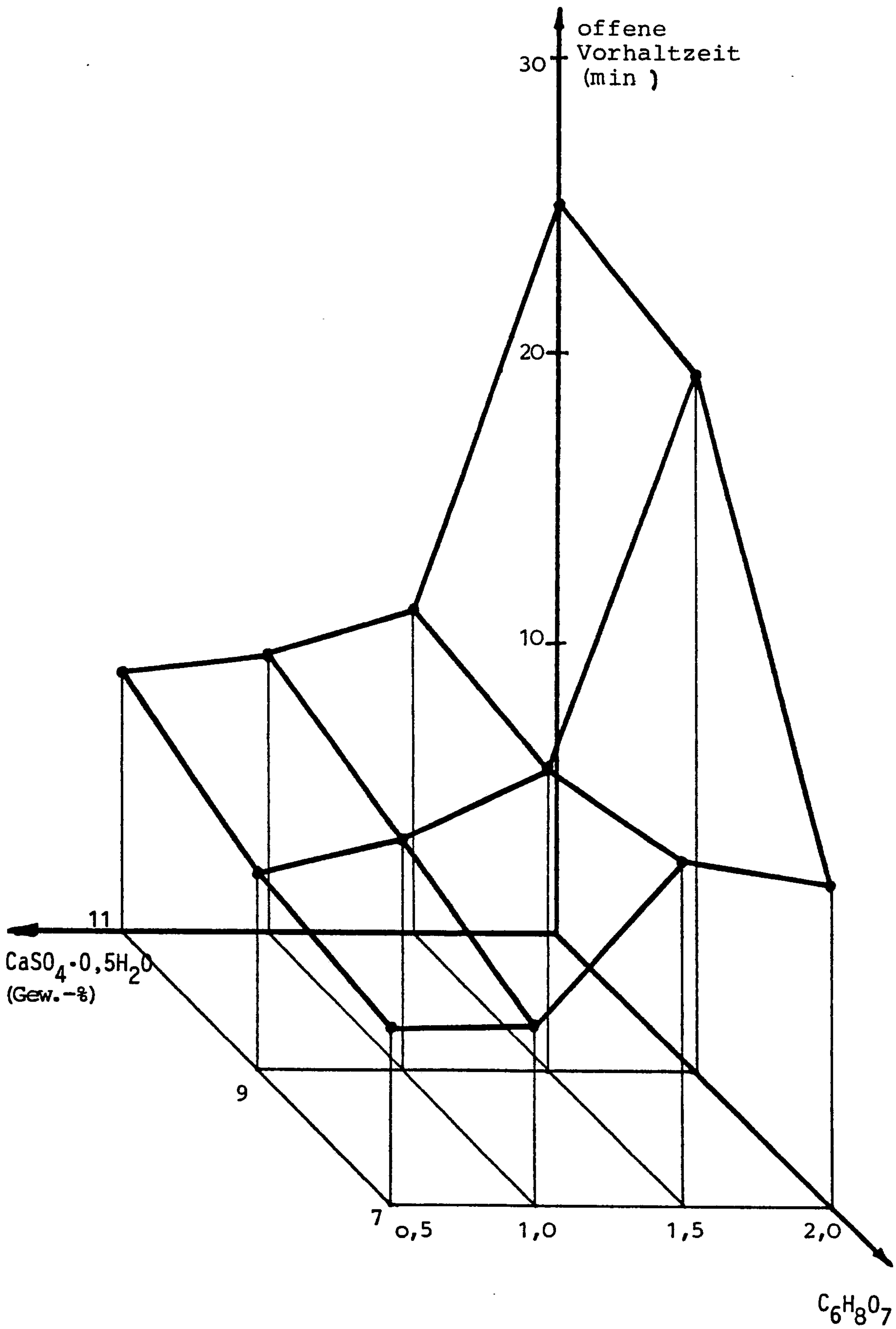
offene
Vorhaltzeit
(min )
30
20
10
11
9
7
$CaSO_4 \cdot 0,5H_2O$
(Gew.-%)
o,5
1,0
1,5
2,0
$C_6H_8O_7$
(Gew.-%)

Fig. 2

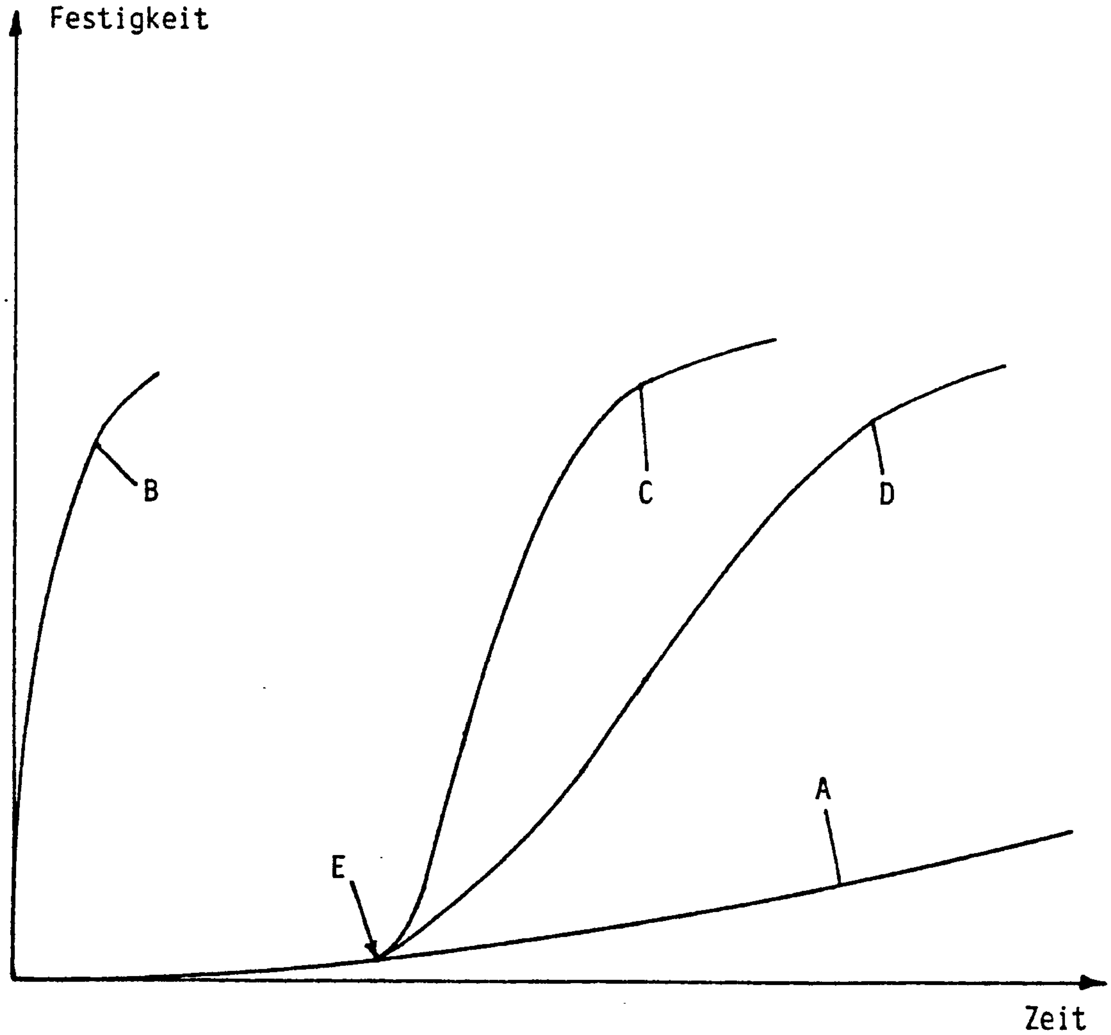


Fig. 3